# EUROPEAN PATENT SPECIFICATION

(11) **EP 3 291 466 B1**
(45) Date of publication and mention of the grant of the patent: **11.03.2020**
(21) Application number: 16186939.1
(22) Date of filing: 02.09.2016
(51) Int. Cl.: H04B 17/21, H04B 17/27, H04B 17/318

(54) **ELECTRONIC DEVICE AND METHOD**
ELEKTRONISCHE VORRICHTUNG UND VERFAHREN
DISPOSITIF ÉLECTRONIQUE ET PROCÉDÉ

(43) Date of publication of application: 07.03.2018
(73) Proprietor: Vestel Elektronik Sanayi ve Ticaret A.S., 45030 Manisa (TR)
(72) Inventor: DERELI, Ulas, 45030 Manisa (TR); CERRAHOGLU, Dursun Sedat, 45030 Manisa (TR)
(74) Representative: Ascherl, Andreas

(56) References cited:
- EP-A2- 1 107 356
- WO-A1-03/035262
- US-A1- 2006 020 978

## Description

### TECHNICAL FIELD

The invention relates to an electronic device for wirelessly transmitting and receiving data and a respective method.

### BACKGROUND

Although applicable to any system that uses wireless data transmission, the present patent application will mainly be described in conjunction with consumer electronic devices like e.g. TV sets, set-top boxes, printers, scanners and the like.

Modern electronic consumer devices communicate digital data over different channels, like e.g. wired networks or wireless networks. Especially in wireless data transmission systems, like e.g. Wi-Fi or Bluetooth, the quality of signal reception depends on a plurality of different factors, which are mostly external to the respective device. The consumer devices usually comprise an internal antenna, which is fixed to a certain position. Further, the devices cannot influence the external factors, which can further change continually. Therefore, with the changing external factors e.g. the speed of data transmission, and the stability of the connection also change continuously.

Document US 2006 / 0 020 978 A1 discloses a digital television broadcast receiver with a rotatably mounted antenna that may be rotatably oriented in different directions. Document EP 1 107 356 A2 discloses a wireless receiver with a movement apparatus for the antenna of the wireless receiver that allows moving the antenna on a circular path. Document WO 03/035262 A1 discloses a rotor displacing material along a spiral path.

Accordingly, there is a need for an improved wireless data transmission in consumer devices.

### SUMMARY

The present invention provides an electronic device with the features of claim 1 and a method with the features of claim 4.

Accordingly, an electronic device for wirelessly transmitting and receiving data comprises a movable antenna, which is controllably movable comprising a mechanical support movable in at least two directions, and a calibration controller, which is configured to control in a calibration phase the antenna to move to a plurality of different positions and to measure the signal strength of a received signal at the different positions. Further, after moving the antenna to the plurality of different positions the calibration controller is further configured to position in a data communication phase the antenna at the position with the highest measured signal strength, wherein the movable antenna comprises said movable mechanical support and an antenna element, which is coupled to the movable mechanical support, and wherein the mechanical support comprises an electro mechanic drive, which is configured to translatable move the mechanical support in the at least two directions, characterized in that the electro mechanic drive comprises a movement guide with a spirally shaped opening and is configured to move the antenna element in two axis by rotating the mechanical support with the antenna element being placed in the spirally shaped opening.

Further, a method for wirelessly transmitting and receiving data comprises controlling in a calibration phase a movable antenna, which is controllably movable and which comprises a mechanical support movable in at least two directions, to move to a plurality of different positions and to measure the signal strength of a received signal at the different positions, and positioning in a data communication phase the antenna at the position with the highest measured signal strength after moving the antenna to the plurality of different positions, wherein when moving the movable antenna said movable mechanical support is moved, to which an antenna element is coupled, and wherein the mechanical support is moved translatable by an electro mechanic drive in the at least two directions, characterized in that the electro mechanic drive is provided with a movement guide with a spirally shaped opening and the antenna element is moved in two axis by rotating the mechanical support with the antenna element being placed in the spirally shaped opening.

In the frequency range of wireless data transmissions in consumer devices, e.g. via Wi-Fi or Bluetooth, movements of the antenna in the range of millimeters or centimeters can have a huge impact on the signal quality and therefore on the speed of data transmission, and the stability of the connection.

If a device comprises a fixed antenna, the user can e.g. move the device, if it is a movable device, to improve the signal reception in the device. However, this is only practical in small devices, like e.g. Tablet-PCs or the like. If the device is e.g. a smart TV set with a large screen, like e.g. a 65 inch screen, it is not practical any more to move the TV set to improve the signal quality.

The present invention therefore parts from the base that the electronic consumer device should not be moved by the user to improve the signal quality. Instead, the present patent application provides the electronic device with a movable antenna. That means, that the antenna can be moved inside of e.g. a housing of the electronic device while the electronic device is in use. This movement of the antenna is controlled by the calibration controller according to the present invention.

The calibration controller in a calibration phase moves the antenna to a plurality of different positions. After moving the antenna to the plurality of positions, the calibration controller will then determine the position with the best signal strength and move the antenna to that position for data transmission in a data transmission phase. It is understood, that during the calibration phase data communication can already be actively performed. The difference will only lay in the varying signal strength.

The signal strength can e.g. be measured by the calibration controller. As an alternative, the signal processing elements in the electronic device can provide the calibration controller with the signal strength value.

The present invention therefore allows optimizing wireless data transmissions in electronic devices by moving the antenna of the electronic device to the optimal position within the movement limits of the antenna. The present invention therefore makes obsolete e.g. external antennas or the like.

Further embodiments of the present invention are subject of the further subclaims and of the following description, referring to the drawings.

In one embodiment, the calibration controller can be configured to permanently monitor the signal strength of the received signal, and if the monitored signal strength is lower than a predetermined threshold below the most recent signal strength at the position with the highest measured signal strength, repeat the calibration phase and position the antenna at the new position with the highest measured signal strength. This means that the calibration controller will permanently monitor the signal strength of the received signal and perform a re-calibration if the signal strength drops below the threshold value. During re-calibration the signal transmission can continue. There is no need to interrupt the signal transmission while the antenna moves. This allows the calibration controller to take into account a changing environment and adapt the antenna position during normal operation of the electronic device.

Further, a time out can be defined in the calibration controller. The calibration controller can e.g. only perform a re-calibration, if the signal strength drops below the threshold value for a time as long as the time out.

The antenna element can e.g. be mechanically fixed to the mechanical support by soldering, gluing, clamping or the like. At the same time the electric connection of the antenna element can be performed via the mechanical support, i.e. via traces or the like. As an alternative, the antenna element can be contacted via a cable.

The antenna element can e.g. be a surface mounted antenna, a PCB antenna, which is e.g. formed of copper traces on a substrate, or any other kind of antenna.

An electro mechanic drive is very flexible and can be easily controlled.

In other exemplary electronic devices, the electro mechanic drive can comprise MEMS drives or any other electromechanical arrangement, which can move the antenna element in at least one direction.

In one embodiment, in the calibration phase or during re-calibration the calibration controller can be configured to move the antenna to the maximum position in every one of the directions and record the signal strength for a plurality of positions between the maximum positions. Further, the calibration controller can be configured to select the position of the antenna in the communication phase based on the recorded signal strengths. The controller can e.g. record the signal strengths in an array, where the array index refers to a specific position, i.e. every position is identified by a number, which is equal to the index of the respective cell/position of the array. Identifying the position with the highest signal strength can then simply be performed by identifying the array index with the highest recorded value.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an example of an electronic device;
Fig. 2 shows a block diagram of another example of an electronic device;
Fig. 3 shows a block diagram of an embodiment of an electronic device according to the present invention in a top view;
Fig. 4 shows a block diagram of the embodiment of an electronic device of Fig. 3 in a side view; and
Fig. 5 shows a flow diagram of an embodiment of a method according to the present invention.
In the figures like reference signs denote like elements unless stated otherwise.

### DETAILED DESCRIPTION OF THE DRAWINGS

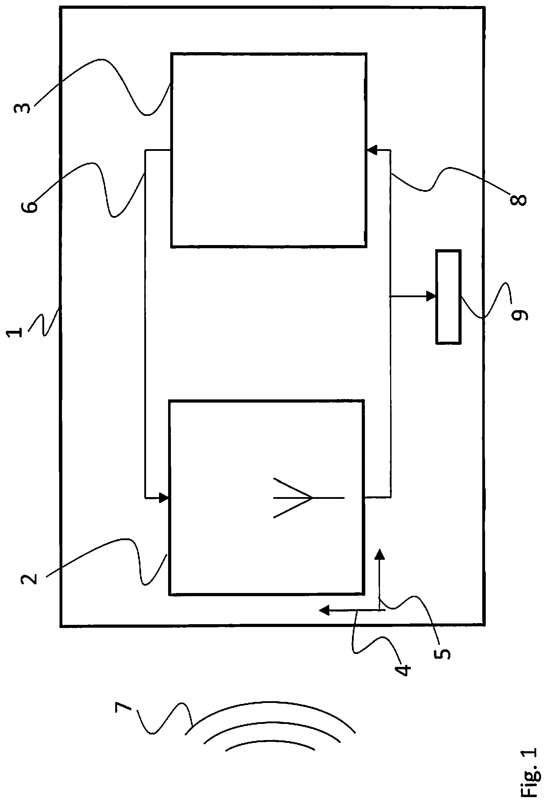

The electronic device 1 of Fig. 1 comprises a movable antenna 2, which is connected to the calibration controller 3. The electronic device 1 further comprises a signal processing unit 9, which performs the regular signal processing for receiving wireless signals 7 in and transmitting wireless signals from the electronic device 1.

The movable antenna 2 is movable in two directions 4, 5, which are perpendicular to each other. The movement of the antenna 2 can be controlled via control commands 6, which are generated by the calibration controller 3. Further, not shown are possible position sensors, which can sense the position of the movable antenna 2 and provide respective measurement values to the calibration controller 3. It is understood, that such position sensors are just optional and that a drive system can be used, which comprises inherent positioning means. Such a drive system can e.g. use stepper motors, where the movement per step is known.

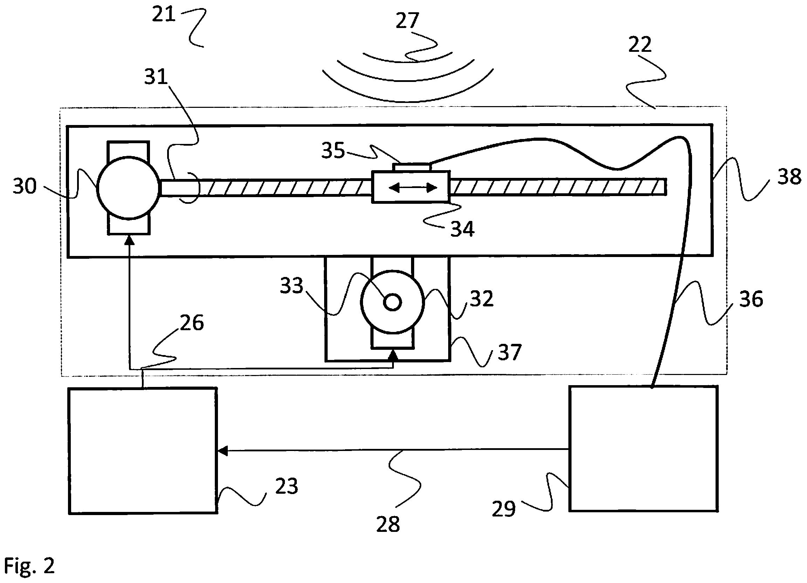

The calibration controller 3 is further configured to evaluate the signal strength 8, also called RSSI (Received Signal Strength Indicator) of the received wireless signal 7. The movable antenna 2 can e.g. comprise signal processing elements, which determine the signal strength 8. As an alternative, the calibration controller 3 can determine the signal strength 8 based on the received signal 7, which can be provided by the movable antenna 2. As a further alternative, as shown in Fig. 2, the signal processing unit 9 can provide the calibration controller 3 with the signal strength 8.

In a calibration mode, the calibration controller 3 will move the movable antenna 2 into a plurality of different positions within the range of movement of the movable antenna 2. The calibration controller 3 can e.g. perform a line-wise or column-wise scanning movement with the movable antenna 2. At the same time, the calibration controller 3 will record the signal strengths 8 for the different positions of the movable antenna 2. Finally, after performing the full scan, i.e. after moving the movable antenna 2 to all required positions, the calibration controller 3 will determine the position of the movable antenna 2, at which the signal strength 8 is the highest. If the signal strength 8 is the highest at a certain position the quality and speed of the signal transmission will also be best at the respective position. Therefore, the calibration controller 3 will move the movable antenna 2 into the respective position for regular operation of the electronic device 1.

In the calibration phase, i.e. while the calibration controller 3 moves the movable antenna 2, the signal processing unit 9 can already start normal operation. The only difference to the normal operation or communication mode is that the signal strength 8 of the received signal 7 will vary at the signal processing unit 9. However, signal processing units 9 are usually configured to handle varying signal strengths, since this also happens in ordinary systems.

As an option, in the normal operation mode of the electronic device 1, the calibration controller 3 will not permanently move the movable antenna 2. Instead, the calibration controller 3 can optionally monitor the signal strength 8 in the normal operation mode, while the signal processing unit 9 performs the respective signal transmissions. Only if the signal strength drops below a predetermined threshold, the calibration controller 3 repeats the calibration, i.e. the moving of the movable antenna 2, the determining of the position of the highest signal strength and the final positioning. The threshold can e.g. be determined by subtracting a given value from the last determined maximum signal strength 8.

The electronic device 21 of Fig. 2 comprises a mechanical arrangement, which works like an x-y cross table. The arrangement comprises two perpendicular axis and an axis movement unit 37, 38 for every axis. Every axis movement unit 37, 38 comprises an electric motor 30, 32, which is functionally connected to a threaded rod 31, 32.

On the threaded rods 31 a slide 34 is shown as an example of how to connect the threaded rod 31 to the moving element, in this case slide 34 of the antenna element 35. The axis movement unit 38 can be connected to the axis movement unit 37 in a similar way, i.e. one element of the axis movement unit 38 can comprise a thread, into which the threaded rod 33 of the axis movement unit 37 can be inserted. The electric motors 30 and 32 are controlled by the calibration controller 23, which generates respective control commands 26.

In Fig. 2 the signal processing unit 29 is connected via a cable 36 to the antenna element 35. The signal processing unit 29 evaluates the received wireless signal 27 and provides the calibration controller 23 with the respective signal strength 28.

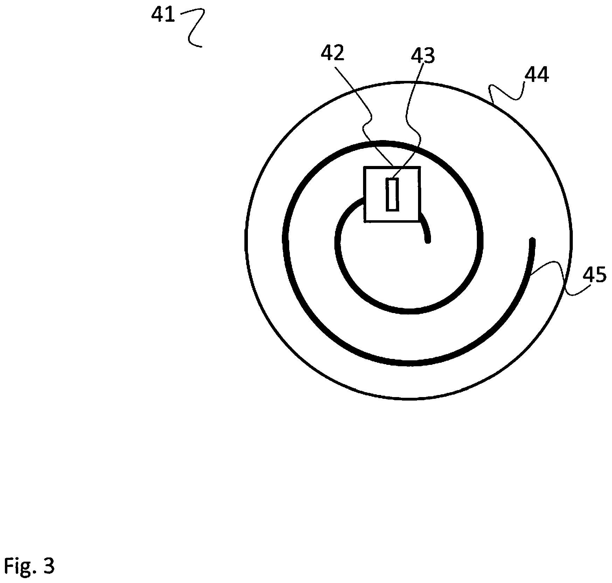

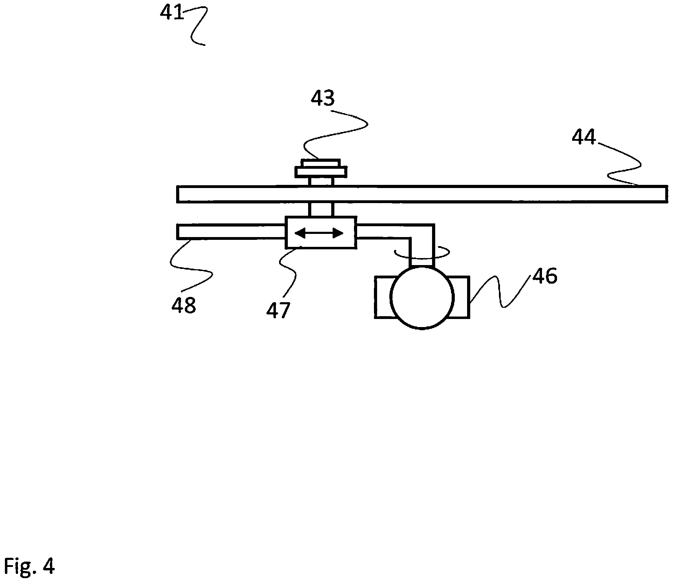

Figs. 3 and 4 show exemplary embodiments of mechanical arrangements for moving the movable antenna 2.

Fig. 3 shows a top view of an alternate mechanical arrangement for moving the antenna element 43. In Fig. 3 a support plate 44 comprises a spiral-shaped guide 45. The spiral-shaped guide 45 is provided as a recess in the support plate 44. A slide 47 (see Fig. 4), which protrudes through the spiral-shaped guide 45 together with the antenna element 43 forms the movable antenna 42.

In Fig. 4 it can be seen that the slide 47 is positioned on a guide rod 48, which has no thread. Instead the slide 47 can freely glide on the guide rod 48. An electric motor 46 rotates the guide rod 48, such that the part of the slide 47 that protrudes through the support plate 44 will be guided by the spiral-shaped guide 45. That means that with every turn of the guide rod 48, the slide 47 will move to the next winding of the spiral-shaped guide 45. Therefore, depending on the direction of rotation of the guide rod 48, the antenna element 43 will move outwards or inwards.

The arrangement of Figs. 3 and 4 can provide a two-dimensional movement of the antenna element 43 with only one electric motor 46.

It is understood, that the mechanical arrangements of Figs. 2 to 4 are just exemplary arrangements. Alternative arrangements can e.g. comprise a third direction of movement, i.e. elevation, or a rotation of the antenna element.

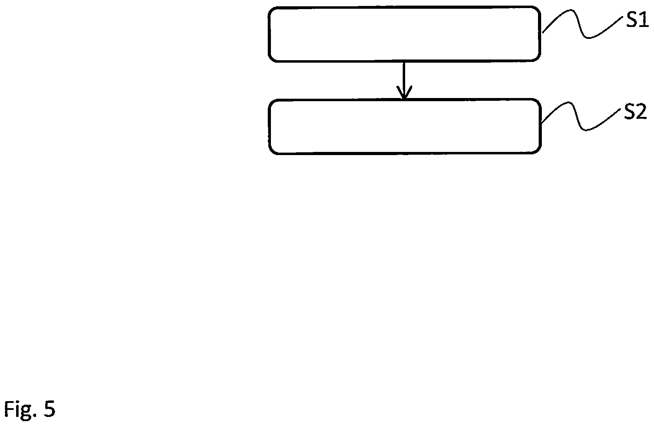

Fig. 5 shows a flow diagram of an embodiment of a method for wirelessly transmitting and receiving data with an electronic device 1, 21, 41.

The method comprises controlling S1 in a calibration phase a movable antenna 2, 22, 42, which is controllably movable in at least one direction 4, 5, 24. The controlling comprises moving the antenna 2, 22, 42 to a plurality of different positions and to measure the signal strength 8, 28 of a received signal 7, 27 at the different positions.

Further in a data communication phase the movable antenna 2, 22, 42 is positioned at the position with the highest measured signal strength 8, 28 after moving the movable antenna 2, 22, 42 to the plurality of different positions.

In the calibration phase the movable antenna 2, 22, 42 can e.g. be moved to the maximum position in every one of the directions 4, 5, 24. Further, the signal strength 8, 28 can be recorded for a plurality of positions between the maximum positions. E.g. a predetermined distance can be given for the different positions at which the signal strength 8, 28 is determined.

The position of the movable antenna 2, 22, 42 in the communication phase, also normal operation phase, is then selected based on the recorded signal strengths 8, 28, especially on the maximum signal strength 8, 28.

The method can further comprise permanently monitoring the signal strength 8, 28 of the received signal 7, 27, i.e. also during a normal operation mode of the electronic device 1, 21, 41. If the monitored signal strength 8, 28 is lower than or drops below a predetermined threshold below the most recent signal strength 8, 28 at the position with the highest measured signal strength 8, 28, the steps of controlling and positioning can be repeated. That means, that the calibration of the movable antenna 2, 22, 42 is repeated.

When moving the movable antenna 2, 22, 42 a movable mechanical support 34, 47 can e.g. be moved, to which an antenna element 35, 43 is coupled. The mechanical support 34, 47 can e.g. be moved translatably or rotatably by an electro mechanic drive in the at least two directions 4, 5, 24.

In one example, the electro mechanic drive can be provided for every direction 4, 5, 24 of movement with a linear electric motor 30, 32, 46 and/or a rotating electric motor 30, 32, 46 with a spindle mechanic.

For example, the electro mechanic drive can be provided with a movement guide 44 with a spirally shaped opening 45. The antenna element 35, 43 can then be moved in two axis by rotating the mechanical support 34, 47 with the antenna element 35, 43 being placed in the spirally shaped opening 45.

## Claims

1. Electronic device (1, 21, 41) for wirelessly transmitting and receiving data, the device comprising:
a movable antenna (2, 22, 42), which is controllably movable, comprising a mechanical support movable in at least two directions (4, 5, 24), and
a calibration controller (3, 23), which is configured to control in a calibration phase the movable antenna (2, 22, 42) to move to a plurality of different positions and to measure the signal strength (8, 28) of a received signal (7, 27) at the different positions,
wherein the calibration controller (3, 23) is further configured to position in a data communication phase the movable antenna (2, 22, 42) at the position with the highest measured signal strength (8, 28), after moving the movable antenna (2, 22, 42) to the plurality of different positions,
wherein the movable antenna (2, 22, 42) comprises said movable mechanical support (34, 47) and an antenna element (35, 43), which is coupled to the movable mechanical support (34, 47), and
wherein the mechanical support (34, 47) comprises an electro mechanic drive, which is configured to translatable move the mechanical support (34, 47) in the at least two directions (4, 5, 24),
**characterized in that** the electro mechanic drive comprises a movement guide (44) with a spirally shaped opening (45) and is configured to move the antenna element (35, 43) in two axis by rotating the mechanical support (34, 47) with the antenna element (35, 43) being placed in the spirally shaped opening (45).

2. Electronic device (1, 21, 41) according to claim 1, wherein the calibration controller (3, 23) is configured to permanently monitor the signal strength of the received signal (7, 27), and when the monitored signal strength (8, 28) is lower than a predetermined threshold below the most recent signal strength (8, 28) at the position with the highest measured signal strength (8, 28), repeat the calibration phase and position the movable antenna (2, 22, 42) at the new position with the highest measured signal strength (8, 28).

3. Electronic device (1, 21, 41) according to any one of the preceding claims, wherein the calibration controller (3, 23) is configured to move in the calibration phase the movable antenna (2, 22, 42) to the maximum position in every one of the directions (4, 5, 24) and record the signal strength (8, 28) for a plurality of positions between the maximum positions, and wherein the calibration controller (3, 23) is configured to select the position of the movable antenna (2, 22, 42) in the communication phase based on the recorded signal strengths (8, 28).

4. Method for wirelessly transmitting and receiving data, the method comprising:
controlling (S1) in a calibration phase a movable antenna (2, 22, 42), which is controllably movable and which comprises a mechanical support movable in at least two directions (4, 5, 24), to move to a plurality of different positions and to measure the signal strength (8, 28) of a received signal (7, 27) at the different positions, and
positioning (S2) in a data communication phase the movable antenna (2, 22, 42) at the position with the highest measured signal strength (8, 28) after moving the movable antenna (2, 22, 42) to the plurality of different positions,
wherein when moving the movable antenna (2, 22, 42) said movable mechanical support (34, 47), to which an antenna element (35, 43) is coupled, is moved, and
wherein the mechanical support (34, 47) is moved translatable by an electro mechanic drive in the at least two directions (4, 5, 24),
**characterized in that** the electro mechanic drive is provided with a movement guide (44) with a spirally shaped opening (45) and the antenna element (35, 43) is moved in two axis by rotating the mechanical support (34, 47) with the antenna element (35, 43) being placed in the spirally shaped opening (45).

5. Method according to claim 4, further comprising permanently monitoring the signal strength (8, 28) of the received signal (7, 27),
wherein when the monitored signal strength (8, 28) is lower than a predetermined threshold below the most recent signal strength (8, 28) at the position with the highest measured signal strength (8, 28), the steps of controlling and positioning are repeated.

6. Method according to any one of the preceding claims 4 and 5, wherein in the calibration phase the movable antenna (2, 22, 42) is moved to the maximum position in every one of the directions (4, 5, 24) and the signal strength (8, 28) is recorded for a plurality of positions between the maximum positions, and
wherein the position of the movable antenna (2, 22, 42) in the communication phase is selected based on the recorded signal strengths (8, 28).

## Patentansprüche

1. Elektronische Vorrichtung (1, 21, 41) zum drahtlosen Senden und Empfangen von Daten, wobei die Vorrichtung umfasst:
eine bewegliche Antenne (2, 22, 42), die steuerbar beweglich ist, mit einem mechanischen Träger, der in mindestens zwei Richtungen (4, 5, 24) beweglich ist, und
eine Kalibrierungssteuerung (3, 23), die so konfiguriert ist, dass sie in einer Kalibrierungsphase die bewegliche Antenne (2, 22, 42) so steuert, dass sie sich in eine Vielzahl von verschiedenen Positionen bewegt und die Signalstärke (8, 28) eines empfangenen Signals (7, 27) an den verschiedenen Positionen misst,
wobei die Kalibrierungssteuerung (3, 23) weiterhin konfiguriert ist, um in einer Datenkommunikationsphase die bewegliche Antenne (2, 22, 42) an der Position mit der höchsten gemessenen Signalstärke (8, 28) zu positionieren, nachdem die bewegliche Antenne (2, 22, 42) in die Vielzahl von verschiedenen Positionen bewegt wurde,
wobei die bewegliche Antenne (2, 22, 42) den beweglichen mechanischen Träger (34, 47) und ein Antennenelement (35, 43) umfasst, das mit dem beweglichen mechanischen Träger (34, 47) gekoppelt ist, und
wobei der mechanische Träger (34, 47) einen elektromechanischen Antrieb umfasst, der so konfiguriert ist, dass er den mechanischen Träger (34, 47) in den mindestens zwei Richtungen (4, 5, 24) translatorisch bewegen kann,
**dadurch gekennzeichnet, dass** der elektromechanische Antrieb eine Bewegungsführung (44) mit einer spiralförmigen Öffnung (45) umfasst und so ausgebildet ist, dass er das Antennenelement (35, 43) durch Drehen des mechanischen Trägers (34, 47) in zwei Achsen bewegt, wobei das Antennenelement (35, 43) in der spiralförmigen Öffnung (45) platziert ist.

2. Elektronische Vorrichtung (1, 21, 41) nach Anspruch 1, wobei die Kalibrierungssteuerung (3, 23) so konfiguriert ist, dass sie die Signalstärke des empfangenen Signals (7, 27) permanent überwacht und, wenn die überwachte Signalstärke (8, 28) niedriger als ein vorbestimmter Schwellenwert unter der letzten Signalstärke (8, 28) an der Position mit der höchsten gemessenen Signalstärke (8, 28) ist, die Kalibrierungsphase wiederholt und die bewegliche Antenne (2, 22, 42) an der neuen Position mit der höchsten gemessenen Signalstärke (8, 28) positioniert.

3. Elektronische Vorrichtung (1, 21, 41) gemäß einem der vorhergehenden Ansprüche, wobei die Kalibrierungssteuerung (3, 23) so konfiguriert ist, dass sie in der Kalibrierungsphase die bewegliche Antenne (2, 22, 42) in jeder der Richtungen (4, 5, 24) in die maximale Position bewegt und die Signalstärke (8, 28) für eine Vielzahl von Positionen zwischen den maximalen Positionen aufzeichnet, und wobei die Kalibrierungssteuerung (3, 23) so konfiguriert ist, dass sie die Position der beweglichen Antenne (2, 22, 42) in der Kommunikationsphase auf der Grundlage der aufgezeichneten Signalstärken (8, 28) auswählt.

4. Verfahren zum drahtlosen Senden und Empfangen von Daten, wobei das Verfahren umfasst:
Steuern (S1) einer beweglichen Antenne (2, 22, 42) in einer Kalibrierungsphase, die steuerbar beweglich ist und die einen mechanischen Träger umfasst, der in mindestens zwei Richtungen (4, 5, 24) beweglich ist, um sich zu einer Vielzahl von verschiedenen Positionen zu bewegen und die Signalstärke (8, 28) eines empfangenen Signals (7, 27) an den verschiedenen Positionen zu messen, und
Positionieren (S2) der beweglichen Antenne (2, 22, 42) in einer Datenkommunikationsphase an der Position mit der höchsten gemessenen Signalstärke (8, 28) nach dem Bewegen der beweglichen Antenne (2, 22, 42) in die Vielzahl der verschiedenen Positionen,
wobei beim Bewegen der beweglichen Antenne (2, 22, 42) der bewegliche mechanische Träger (34, 47), an den ein Antennenelement (35, 43) gekoppelt ist, bewegt wird und
wobei der mechanische Träger (34, 47) durch einen elektromechanischen Antrieb in den mindestens zwei Richtungen (4, 5, 24) translatorisch bewegbar ist,
**dadurch gekennzeichnet, dass** der elektromechanische Antrieb mit einer Bewegungsführung (44) mit einer spiralförmigen Öffnung (45) versehen ist und das Antennenelement (35, 43) durch Drehen des mechanischen Trägers (34, 47) in zwei Achsen bewegt wird, wobei das Antennenelement (35, 43) in die spiralförmige Öffnung (45) eingesetzt wird.

5. Verfahren nach Anspruch 4, weiterhin umfassend die permanente Überwachung der Signalstärke (8, 28) des empfangenen Signals (7, 27),
wobei, wenn die überwachte Signalstärke (8, 28) niedriger als ein vorbestimmter Schwellenwert unterhalb der letzten Signalstärke (8, 28) an der Position mit der höchsten gemessenen Signalstärke (8, 28) ist, die Schritte der Steuerung und Positionierung wiederholt werden.

6. Verfahren nach einem der vorhergehenden Ansprüche 4 und 5, wobei in der Kalibrierungsphase die bewegliche Antenne (2, 22, 42) in jeder der Richtungen (4, 5, 24) in die maximale Position bewegt wird und die Signalstärke (8, 28) für eine Vielzahl von Positionen zwischen den maximalen Positionen aufgezeichnet wird, und
wobei die Position der beweglichen Antenne (2, 22, 42) in der Kommunikationsphase auf der Grundlage der aufgezeichneten Signalstärken (8, 28) ausgewählt wird.

## Revendications

1. Dispositif électronique (1, 21, 41) pour la transmission et la réception sans fil de données, le dispositif comprenant :
une antenne mobile (2, 22, 42), qui est mobile de manière contrôlable, comprenant un support mécanique mobile dans au moins deux directions (4, 5, 24), et
un contrôleur d'étalonnage (3, 23), qui est configuré pour commander dans une phase d'étalonnage l'antenne mobile (2, 22, 42) afin qu'elle se déplace vers une pluralité de positions différentes et pour mesurer l'intensité (8, 28) d'un signal reçu (7, 27) aux différentes positions,
dans lequel le contrôleur d'étalonnage (3, 23) est en outre configuré pour positionner, dans une phase de communication de données, l'antenne mobile (2, 22, 42) à la position ayant la force de signal mesurée la plus élevée (8, 28), après avoir déplacé l'antenne mobile (2, 22, 42) vers la pluralité de positions différentes,
dans lequel l'antenne mobile (2, 22, 42) comprend ledit support mécanique mobile (34, 47) et un élément d'antenne (35, 43), qui est couplé au support mécanique mobile (34, 47), et
dans lequel le support mécanique (34, 47) comprend un entraînement électromécanique, qui est configuré pour déplacer en translation le support mécanique (34, 47) dans au moins deux directions (4, 5, 24),
**caractérisé en ce que** l'entraînement électromécanique comprend un guide de mouvement (44) avec une ouverture en forme de spirale (45) et est configuré pour déplacer l'élément d'antenne (35, 43) sur deux axes en faisant tourner le support mécanique (34, 47), l'élément d'antenne (35, 43) étant placé dans l'ouverture en forme de spirale (45).

2. Dispositif électronique (1, 21, 41) selon la revendication 1, dans lequel le contrôleur d'étalonnage (3, 23) est configuré pour surveiller en permanence l'intensité du signal reçu (7, 27), et lorsque l'intensité du signal surveillé (8, 28) est inférieure à un seuil prédéterminé en dessous de l'intensité du signal la plus récente (8, 28) à la position avec l'intensité du signal mesurée la plus élevée (8, 28), répéter la phase d'étalonnage et positionner l'antenne mobile (2, 22, 42) à la nouvelle position avec l'intensité du signal mesurée la plus élevée (8, 28).

3. Dispositif électronique (1, 21, 41) selon l'une quelconque des revendications précédentes, dans lequel le contrôleur de calibrage (3, 23) est configuré pour déplacer dans la phase de calibrage l'antenne mobile (2, 22, 42) vers la position maximale dans chacune des directions (4, 5, 24) et enregistrer l'intensité du signal (8, 28) pour une pluralité de positions entre les positions maximales, et dans lequel le contrôleur de calibrage (3, 23) est configuré pour sélectionner la position de l'antenne mobile (2, 22, 42) dans la phase de communication sur la base des intensités de signal enregistrées (8, 28).

4. Procédé de transmission et de réception de données sans fil, le procédé comprenant :
la commande (S1) dans une phase d'étalonnage d'une antenne mobile (2, 22, 42), qui est mobile de manière contrôlable et qui comprend un support mécanique mobile dans au moins deux directions (4, 5, 24), pour se déplacer vers une pluralité de positions différentes et pour mesurer l'intensité de signal (8, 28) d'un signal reçu (7, 27) aux différentes positions, et
le positionnement (S2) dans une phase de communication de données de l'antenne mobile (2, 22, 42) à la position ayant la plus grande intensité de signal mesurée (8, 28) après avoir déplacé l'antenne mobile (2, 22, 42) vers la pluralité de positions différentes,
dans lequel, lors du déplacement de l'antenne mobile (2, 22, 42), ledit support mécanique mobile (34, 47), auquel un élément d'antenne (35, 43) est couplé, est déplacé et
dans lequel le support mécanique (34, 47) est déplacé en translation par un entraînement électromécanique dans au moins deux directions (4, 5, 24),
**caractérisé en ce que** l'entraînement électromécanique est muni d'un guide de mouvement (44) avec une ouverture en forme de spirale (45) et l'élément d'antenne (35, 43) est déplacé sur deux axes en faisant tourner le support mécanique (34, 47), l'élément d'antenne (35, 43) étant placé dans l'ouverture en forme de spirale (45).

5. Procédé selon la revendication 4, comprenant en outre la surveillance permanente de l'intensité du signal (8, 28) du signal reçu (7, 27),
dans lequel lorsque l'intensité du signal surveillé (8, 28) est inférieure à un seuil prédéterminé en dessous de l'intensité du signal le plus récent (8, 28) à la position avec l'intensité du signal mesurée la plus élevée (8, 28), les étapes de contrôle et de positionnement sont répétées.

6. Procédé selon l'une quelconque des revendications précédentes 4 et 5, dans lequel, dans la phase d'étalonnage, l'antenne mobile (2, 22, 42) est déplacée vers la position maximale dans chacune des directions (4, 5, 24) et l'intensité du signal (8, 28) est enregistrée pour une pluralité de positions entre les positions maximales, et
dans lequel la position de l'antenne mobile (2, 22, 42) dans la phase de communication est choisie en fonction des intensités de signal enregistrées (8, 28).
